# EUROPEAN PATENT APPLICATION

(11) **EP 3 620 494 A1**
(43) Date of publication of application: **11.03.2020**
(21) Application number: 18192846.6
(22) Date of filing: 06.09.2018
(51) Int. Cl.: C09D 5/02, C09D 7/20, C09D 7/43, C08K 5/20

(54) **RHEOLOGY MODIFIER AND COMPATIBILIZER**

(71) Applicant: Holland Novochem Technical Coatings B.V., 3994 DJ Houten (NL)
(72) Inventor: BIJPOST, Erik Alexander, 3436 ZD Nieuwegein (NL); MASLOW, Alexander, 7411 PT Deventer (NL)

(57) **Abstract**

The invention pertains to the use of lactam and/or lactam adduct as a rheology modifier and/or compatibilizer.

## Description

The present invention relates to new uses of lactam and compositions comprising lactam.

The most well-known lactam is ε-caprolactam, which is used as a monomer in nylon 6. In the production ε-caprolactam is melted after which additives including water are added. Subsequently, ring-opening polymerization is performed at 240°C to 270°C to form nylon 6. Other known uses of ε-caprolactam are as raw material for the production of certain drugs, such as pentylenetetrazol, meptazinol and laurocapram. Other lactams have also been used as raw material or intermediate in the production of other chemicals.

It has been suggested to use ε-caprolactam as solvent. In WO 2015/130285 and WO 2015/069288, it is indicated that ε-caprolactam can be used to remove cured resins. Both publications however do not provide any details as to how to use the solid form of ε-caprolactam to perform the cured resin removal. Also in pharmaceutical applications such as in WO 09/100222 and WO 09/100216, ε-caprolactam is indicated as one of the possible solvents without providing actual evidence.

Aqueous solutions of ε-caprolactam have been disclosed for use in hydrocarbon extraction, e.g. US 3,503,875, DE 2 114 970 and WO 14/206862 and for stain removal, e.g. DE 4 001 688. Such aqueous solutions are further used to stabilize metallic nanoparticles as described in EP 2 671 927 and CN 104313722. Additionally, GB 1060063 and US 4,023,924 disclose dye stuff paste and dye stuff that are dissolved in aqueous solutions of ε-caprolactam or γ-butyrolactam.

The objective of the present invention is to provide a new use and to provide improved compositions.

The present invention pertains to the use of a lactam and/or an adduct of lactam as a rheology modifier and/or compatibilizer. More particularly, the invention pertains to the use of a lactam and/or an adduct of lactam in compositions, wherein the composition has a lower viscosity compared to a composition without the lactam and/or the adduct of lactam, and/or the composition is more compatible compared to a composition without the lactam and/or the adduct of lactam. It was observed that upon addition of relatively small amounts (even less than 5 wt% based on total weight of the composition) a strong effect on rheology and/or compatibilization may occur, e.g. a significant decrease in viscosity has been observed.

With "rheology modifier" is meant that the viscosity, particularly the static viscosity and/or dynamic viscosity, is altered when a lactam and/or lactam adduct is present in the composition compared to compositions without the lactam and/or lactam adduct. Generally, the presence of lactam and/or lactam adduct leads to a lowering of the viscosity, particularly the static and/or dynamic viscosity, of the composition compared to compositions without the lactam and/or lactam adduct. It is noted that solvents may increase the solubility of a compound but the addition of such a solvent does not mean that the rheology of the solution is changed, let alone its viscosity is lowered. It was found that addition of lactam and/or lactam adduct to a liquid considerably and significantly reduces the viscosity of that liquid. The liquid may be a solution, emulsion and/or suspension. When the addition of the lactam and/or lactam adduct of the invention leads to a lowering of the static viscosity and/or dynamic viscosity of the liquid (solution, emulsion and/or suspension), the lactam and/or lactam adduct is to be considered a rheology modifier according to the invention. The static viscosity and dynamic viscosity are well known in the art and can be measured using conventional techniques.

The term "compatibilizer" refers to the property of lactam and/or lactam adduct of enjoining two substances that would otherwise not mix, i.e. that would cause phase separation. Such substances generally differ in their polarity, e.g. a hydrophilic substance and a hydrophobic substance. Not being bound by theory, it is believed that the lactam and/or lactam adduct changes the Van der Waals forces between molecules and/or the hydrogen bonds, which allows substances that would otherwise not mix or be compatible to mix, which in turn leads to stable compositions without considerable phase separation or segregation. It is further believed that intramolecular interaction, e.g. in long chain polymers (over 50 monomeric building blocks) can also be positively influenced, which may lead to a faster dissolving of said polymer, for example. When water (or any other hydrophilic solvent) is present, the lactam and/or lactam adduct appears to render water to be more hydrophobic. The lactam and/or adduct of lactam may be considered as a hydrotrope. The compatibilizer property can be measured by mixing a hydrophobic substance with the lactam and/or lactam adduct of the invention and optionally with water, stirring mechanically for 5 minutes at 1,000 rpm, and subsequently leaving the mixture stand for 5 minutes (without stirring). When no phase separation is observed, the lactam and/or lactam adduct is to be considered a compatibilizer according to the invention. Alternatively, a solid hydrophobic substance may be mixed with lactam and/or lactam adduct - which is also solid at room temperature when the lactam is ε-caprolactam - and heat the mixture until a liquid is formed, which is cooled to room temperature and leaving the resulting liquid for 5 minutes at room temperature. When no phase separation is observed, the lactam and/or lactam adduct is to be considered a compatibilizer according to the invention. Moreover and alternatively, a concentrated (inorganic) salt solution, e.g. brine, is mixed with the lactam and/or lactam adduct of the invention, and stirred mechanically for 5 minutes at 1,000 rpm, and subsequently leaving the mixture stand for 5 minutes (without stirring). When the salt concentration in the solution is lowered and/or when (more) salt is deposited and/or no phase separation is observed, the lactam and/or lactam adduct is to be considered a compatibilizer according to the invention. Furthermore and alternatively, an organic and polymeric salt which is soluble in water but requires considerable time to completely dissolve in water, e.g. carboxymethyl cellulose, is dissolved in water in the presence of the lactam and/or lactam adduct of the invention. When the time to completely dissolve the organic salt in water is shorter than the time to completely dissolve the organic salt without the lactam and/or lactam adduct being present (under the same conditions, e.g. temperature, pressure and pH), the lactam and/or lactam adduct is to be considered a compatibilizer according to the invention.

The lactam of the invention is well known in the art and refers to a cyclic amide. Examples of lactams include β-lactam, γ-lactam, δ-lactam and ε-lactam. The lactam may be substituted, e.g. with C₁-C₄ alkyl or vinyl, or unsubstituted. Unsubstituted lactams are preferred. Examples of unsubstituted lactams include 2-azetidinone, γ-butyrolactam, 2-piperidinone and ε-caprolactam. Preferably, the lactam is selected from γ-butyrolactam and ε-caprolactam. Most preferably, the lactam is ε-caprolactam.

The lactam adduct of the invention may be adducts or condensation products of the aforementioned lactams with an aldehyde. The aldehyde suitable for the inventive adducts generally are capable of reacting with a carbon and/or nitrogen present in the cyclic ring of the lactam. Substitution at the carbon, preferably α substitution, is preferred when the reaction is performed under alkaline conditions. The reaction at the carbon, preferably α substitution, is preferred. Suitable aldehydes include formaldehyde, acetaldehyde, crotonaldehyde, acrolein, benzaldehyde, and furfural. Formaldehyde is the preferred aldehyde. Also lactam adducts comprising two or more lactams are contemplated. Moreover, lactam adducts comprising two or more aldehydes are contemplated, as well as adducts comprising two or more lactams and two or more aldehydes are contemplated. The adduct may comprise two, three, four or more (cyclic) lactams which are separated by a linker which is formed by the aldehyde. The lactam adduct of the invention maintains the amide functional groups in each cyclic ring.

In one embodiment of the invention, the lactam adduct may be formed by reacting a lactam, an aldehyde and a first resin capable of reacting with the aldehyde. Preferably, the first resin is a monomer and/or an oligomer. Most preferably, the first resin is a monomer. In another embodiment, the lactam adduct may be formed by reacting a lactam and a first resin capable of reacting with the lactam. Examples of such first resins are aminoplasts and polyols.

Preferably, the lactam and/or lactam adduct of the invention are lactam and a lactam adduct of lactam and an aldehyde, preferably the lactam adduct which is substituted at the C carbon of the lactam. Of these, lactam is more preferred. Even more preferably, the lactam is selected from γ-butyrolactam and ε-caprolactam. Most preferably, the lactam is ε-caprolactam.

It is noted that the embodiments of the invention presented below all make use of the rheology modifying and/or compatibilizing properties of the lactam and/or lactam adduct.

### Coating composition

The invention further pertains to a coating composition comprising a lactam and/or an adduct of lactam, and optionally water, and a first resin, wherein the composition has a lower viscosity compared to a composition without the lactam and/or the adduct of lactam, and/or the composition is more compatible compared to a composition without the lactam and/or the adduct of lactam. The addition of lactam and/or lactam adduct to a coating composition generally lowers the viscosity of the coating composition, even when small amounts of the lactam and/or lactam adduct are added. Moreover, coating compositions with a higher solids content can now be provided. In such cases, the amount of water can be reduced or even omitted. The lower (or absence of) water content has the further advantage that less heat is necessary to evaporate water, which can considerably reduce the energy necessary for thermal curing of coating compositions. The presence of lactam and/or lactam adduct allows hydrophobic resins, which are generally very viscous or even solid at room temperature to be processed and used, even in water-based coating compositions, which would otherwise not be possible. Moreover, the lactam and/or lactam adduct can act as a reactive solvent and react with the resin upon curing. The use of the lactam and/or lactam adduct may lead to the use of a lower amount of organic solvents or even obviates the use of organic solvents completely, which in turn leads to a low VOC (volatile organic compounds) level, which renders the coating composition of the invention more environmentally friendly. Due to its high boiling points (above 250°C), e.g. 270°C for ε-caprolactam and 256°C for γ-valerolactam, the lactam does not contribute to the VOC level of a coating composition. Moreover, ε-caprolactam is a food-approved compound which renders its use in coating compositions suitable for food applications, e.g. in coating compositions applied on the inside of food or drink cans. The lactam and/or lactam adduct may further alter the properties of the cured coating composition. The cured coating composition may have improved scratch resistance, good retort-sterilisable properties, enhanced resistance towards chemicals, good adhesion to a wide variety of substrates, good abrasion resistance, and/or compatibility to a wide variety of pigment and dyes.

The first resin can be any resin known in the art and used in coating compositions. The first resin of the invention may be a monomer, an oligomer or polymer. The first resin may be an alkyd resin, an acrylic resin, a polyester resin, a polyester polyol resin, a silicone-based resin, a phenolic resin, a urethane-based or isocyanate based resin, an aminoplast and an epoxy resin. Also compositions comprising a second resin are contemplated. It is noted that conventional coating composition may only contain up to 30 wt% of a first resin, e.g. a polyester; the total amount of resin is determined by the viscosity of the coating composition, which becomes so high that normal application of the coating composition is not possible anymore. The lactam and/or lactam adduct of the invention enables a higher amount while maintaining a low viscosity. For example, the inventors have found that conventional coating compositions with a polyester content of 30 wt% can contain up to 60 wt% when lactam and/or lactam adduct is added to the coating composition.

Examples of alkyd resins include drying and non-drying alkyd resins. Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Examples of phenolic resins include phenol-formaldehyde-based resins such as novolacs and resols. Examples of isocyanate-based resins include tolene diisocyanate (TDI), methylene diphenyl diisocyanate (MDI), 1,6-hexamethylene diisocyanate (HMDI), isophorone diisocyanate (IPDI) and 4,4'-diisocyanato dicyclohexylmethane (H₁₂MDI). Examples of epoxy resins include bisphenol A epoxy resins, bisphenol F epoxy resins, novolac epoxy resins, aliphatic epoxy resins, cycloaliphatic epoxy resins and glycidyl amine epoxy resins.

In one embodiment of the invention, the coating composition comprises the first resin in an amount of at least 10 % by weight (wt%), based on the total weight of the coating composition. Preferably, the first resin is present in an amount of at least 15 wt%, more preferably at least 20 wt%, even more preferably at least 30 wt%, even more preferably at least 40 wt%, even more preferably at least 50 wt% and most preferably at least 60 wt%, and preferably at most 95 wt%, more preferably at most 90 wt%, even more preferably at most 85 wt% and most preferably at most 80 wt%, based on the total weight of the coating composition.

In one embodiment of the invention, the coating composition comprises the first resin in an amount of at least 10 % by weight (wt%), based on the total weight of the first resin and the lactam and/or lactam adduct. Preferably, the first resin is present in an amount of at least 15 wt%, more preferably at least 20 wt%, even more preferably at least 30 wt%, even more preferably at least 40 wt%, even more preferably at least 50 wt% and most preferably at least 60 wt%, and preferably at most 95 wt%, more preferably at most 90 wt%, even more preferably at most 85 wt% and most preferably at most 80 wt%, based on the total weight of the first resin and the lactam and/or lactam adduct.

The coating composition of the invention comprises the lactam and/or lactam adduct in an amount of at most 90 % by weight (wt%), based on the total weight of the coating composition. Preferably, the first resin is present in an amount of at most 85 wt%, more preferably at most 80 wt%, even more preferably at most 70 wt%, even more preferably at most 60 wt%, even more preferably at most 50 wt% and even most preferably at most 40 wt%, and preferably at least 1 wt%, more preferably at least 2 wt%, even more preferably at least 5 wt%, even more preferably at least 10 wt%, even more preferably at least 15 wt% and most preferably at least 20 wt%, based on the total weight of the coating composition.

The coating composition of the invention comprises the lactam and/or lactam adduct in an amount of at most 90 % by weight (wt%), based on the total weight of the first resin and the lactam and/or lactam adduct. Preferably, the first resin is present in an amount of at most 85 wt%, more preferably at most 80 wt%, even more preferably at most 70 wt%, even more preferably at most 60 wt%, even more preferably at most 50 wt% and even most preferably at most 40 wt%, and preferably at least 5 wt%, even more preferably at least 10 wt%, even more preferably at least 15 wt% and most preferably at least 20 wt%, based on the total weight of the first resin and the lactam and/or lactam adduct.

In another embodiment of the invention, the coating composition comprises solids in an amount of at least 15 % by weight (wt%), based on the total weight of the coating composition. Preferably, the solids are present in an amount of at least 20 wt%, more preferably at least 30 wt%, even more preferably at least 40 et%, even more preferably at least 50 wt%, and most preferably at least 60 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid and/or non-volatile material (e.g. reactive diluents/solvents) in the coating composition; typically the solids include the resins, pigments, dyes, catalyst, etc. and does not include solvents that evaporate during the curing process. The amount of solids may also be referred to as "solids content".

The remaining part of the coating composition may be comprised of other components commonly used in coating compositions. With the first resin and the lactam and/or lactam adduct the other components add up to 100 wt% of the total weight of the coating composition.

In an embodiment of the invention, the coating composition of the invention can be further diluted by a solvent to obtain a solids content below 40 wt%. For certain applications, such as the application of extremely thin coating layers, this may be warranted. In such case, the solids content in the coating composition of the invention may be preferably at most 35 wt%, more preferably at most 30 wt% and most preferably at most 25 wt%, and preferably at least 1 wt%, more preferably at least 2 wt%, even more preferably at least 5 wt%, and most preferably at least 10 wt%.

Alternatively, the coating compositions with the higher solids content (above 50 wt%) may be diluted with a suitable solvent, and optionally additives, just prior to application to a substrate. The dilution level may be used as desired, and the skilled person is well capable of diluting in an appropriate manner.

The coating composition of the invention may further comprise a solvent. The solvent may be any suitable solvent known in the art. Preferred solvents are reactive solvents that comprise a functional group capable of reacting with the first resin. The functional group may be hydroxyl, amine or thiol. Preferably, the functional group is a hydroxyl or an amine. Examples of reactive solvents include alcohols, such as methanol, ethanol, diethanol, amino ethanol, glycol, n-propanol, iso-propanol and ethanethiol, ethylene glycol, propylene glycol and neopentyl glycol; and amines, such as methyl amine, ethanol amine, dimethyl amine, methyl ethanol amine, diphenyl amine, trimethyl amine, triphenyl amine and piperidine; and acrylates such as acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, and 3-hydroxypropyl methacrylate; and water.

In one embodiment of the invention, the coating composition further comprises water as solvent, in particular as the reactive solvent. Combinations of water and the lactam and/or lactam adduct of the invention have been particularly interesting for its ability to compatibilize a wider range of first resins, also the ones that are quite hydrophobic (i.e. not miscible with or dissolvable in water). In one embodiment, the weight ratio of water and the lactam and/or lactam adduct is at least 0.001, preferably at least 0.01, more preferably at least 0.1, even more preferably at least 0.2 and most preferably at least 0.5, and generally at most 1000, preferably at most 100, more preferably at most 10, even more preferably at most 5, and most preferably at most 3.

Examples of non-reactive solvents include Solvent Naphtha®, heavy benzene, various Solvesso® grades, various Shellsol® grades and Deasol®, various white spirits, mineral turpentine oil, tetralin, decalin, methyl ethyl ketone, acetone and methyl n-propyl ketone. Non-reactive solvents that are incorporated at least partially and preferably completely, into the cured resin are preferred. Preferably, the non-reactive solvent has a boiling point above the curing temperature, preferably above 250 °C. The coating composition of the invention may comprise a reactive solvent and a non-reactive solvent, a combination of two or more solvents, or a combination of two or more reactive solvents. Coating compositions comprising a reactive solvent and/or water are preferred.

The coating composition of the invention may comprise the non-reactive solvent and/or the reactive solvent in an amount of at most 30 % by weight (wt%), based on the total weight of the coating composition. Preferably, the non-reactive solvent and/or the reactive solvent is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

In a further embodiment, the coating composition of the invention may comprise water in an amount of at most 85 % by weight (wt%), based on the total weight of the coating composition. Preferably, the water is present in an amount of at most 70 wt%, more preferably at most 60 wt%, even more preferably at most 50 wt%, even more preferably at most 40 wt% and most preferably at most 30 wt%, and preferably at least 1 wt%, more preferably at least 2 wt%, even more preferably at least 5 wt% and most preferably at least 10 wt%, based on the total weight of the coating composition.

The coating composition may further comprise additives commonly used in coating compositions including pigments and dyes, surfactants, flow controlling agents, thixotropic agents, anti-gassing agents, ultraviolet light stabilizers, adhesion enhancing promoters, waxes, filling agents, matting agents, defoamers and curing catalysts. The additives can be any additive known in the art. Examples of pigments and dyes include metal oxides like titanium dioxide, iron oxide, zinc oxide and chromium oxide; metal hydroxides; metal sulfides, metal sulfates, metal carbonates such as calcium carbonate; carbon black, china clay, phthalo blues and greens, organo reds and other organic dyes. The coating compositions of the invention may increase the color intensity of the pigments and dyes. This may lead to a reduction in the total amount of pigment and/or dye used. The curing catalyst is preferably a strong acid. Examples of suitable curing catalysts include p-toluenesulfonic acid, xylenesulfonic acid, dodecyl benzene sulfonic acid, dinonyl naphthalene sulfonic acid, dinonyl naphthalene disulfonic acid, fluorosulfuric acid, trifuoromethane sulfonic acid, hexafluoro antimonate compounds and catalysts derived thereof, phosphoric acid and sulfuric acid. Examples of ultraviolet light stabilizers include benzophenone, such as hydroxydodecyl benzophenone, 2,4-dihydroxy-3',5'-di-t-butylbenzophenone, 2-hydroxy-4-acryloxyethoxybenzophenone and 2-hydroxy-4-methoxy-2'-carboxybenzophenone.

The coating composition of the invention may comprise the additives in an amount of at most 30 % by weight (wt%), based on the total weight of the coating composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The invention further pertains to a process for preparing a coated substrate comprising the steps of: (a) applying the coating composition according to the invention to a substrate; and (b) curing the coating composition. The process may further comprise the step of shaping the coated substrate to a food or beverage container.

The invention also pertains to a coated substrate coated substrate comprising a substrate and a cured coating composition applied to at least part of the substrate, the coating composition being in accordance with the invention. In an embodiment of the invention the coated substrate is a food or beverage container. The cured coating composition has all the advantages as described above for the cured coating composition. A further advantage of the cured coating composition is that the volatile organic compounds (VOC) level is generally very low. The VOC level is typically determined using standard method ASTM D3960-05(2013). The amount of VOC in the coating composition of the invention is generally at most 100 g/l, preferably at most 75 g/l, more preferably at most 50 g/l, even more preferably at most 30 g/l, even more preferably at most 20 g/l, even more preferably at most 10 g/l, even more preferably at most 5 g/l and most preferably at most 1 g/l. As the lactams and/or lactam adduct generally do not contribute to the VOC level, the coating composition when comprising lactam and/or lactam adduct and optionally water may result in an amount of VOC of 0 g/l.

The substrate of the invention can be any substrate known in the art. The substrate may be porous or non-porous. Examples of suitable substrates include metals, such as aluminum, aluminum alloys, steel, steel alloys, tin, tin alloys, zinc, zinc alloys, chrome and chrome alloys; glass such as fused silica glass, aluminosilicate glass, soda-lime-silica glass, borosilicate glass and lead-oxide glass; ceramics, such as porcelain, bone china, alumina, ceria, zirconia, carbides, borides, nitrides and silicides; plastic such as functionalized polyethylene (PE), functionalized polypropylene (PP), polyethylene terephthalate (PET), polyvinyl chloride (PVC) and nylons; and wood. Preferably, the substrate is metal, in particular aluminum.

In the context of the present application the term "cure" or "cured" refers to the process of hardening of the coating composition by polymerization and/or crosslinking. This curing process can be initiated by exposure to ultraviolet radiation, heat, such as by infrared radiation, by microwave radiation or by heating, e.g. in an oven, electron beams and chemical additives. The coating compositions of the invention preferably cure through exposure to ultraviolet radiation and heat, preferably through heat.

In a further embodiment of the invention, the coating composition of the invention can be used in application where corrosion protection and/or cured coating flexibility and formability are required. Examples of such applications include coil coating applications, can coatings (both external and internal can coatings), car refinish, and automotive applications.

### Coating composition comprising first resin and aminoplast

In an embodiment of the invention, the invention pertains to a coating composition comprising a a lactam and/or lactam adduct and a first resin, preferably a polyol, and an aminoplast, and/or an adduct of a first resin and an aminoplast wherein the molar ratio of the first functional groups of the aminoplast and the second functional groups of the first resin, preferably the polyol, is at least 0.01, and the aminoplast is present in an amount of at least 10 wt%, based on the total weight of first resin and aminoplast. The composition of the invention contains an excess of functional groups of the aminoplast as compared to the functional groups of the first resin, preferably the polyol. This means that the aminoplast will also self-condensate when exposed to curing conditions. The aminoplast hence does not serve as crosslinking agent only as is generally the case in the prior art, but also forms oligomers and/or polymers of the aminoplast which may subsequently react with the first resin, preferably the polyol. This leads to a unique resin that is not disclosed in any of the cited references. The coating composition of the invention is furthermore relatively simple compared to known compositions, and is therefore commercially and economically more attractive. The composition is generally easy to formulate. Moreover, the coating composition of the invention can be readily applied to substrate surfaces even at high speeds using conventional coating devices. The inventive composition enables the formation of a cured coating that exhibits good retort-sterilisable properties, enhanced resistance towards chemicals, good adhesion to a wide variety of substrates, good abrasion resistance, and compatibility to a wide variety of inks. The color intensity of the inks may be improved allowing the use of a lower amount of ink. The coating composition of the invention generally has good leveling characteristics and leads to cured coatings with improved gloss and transparency. The coating composition further enables the creation of tactile (haptic) surfaces and/or structured surfaces such as coarse surfaces, and allows such structures to be present (touch and feel) after application of the (cured) coating composition of the invention.

In the context of this application the term "functional group(s)" refers to the reactive group(s) taking part in the curing process. Examples of such functional groups of the first resin, preferably the polyol, include hydroxyl (-OH), carboxylic acid (-COOH), carboxylic ester (-COOR), linear carbonates (R-CO₃), cyclic carbonates, oxirane, oxetane, anhydrides (R-CO-O-CO-R'), and thiol (-SH). Examples of functional groups for aminoplasts include amine (-NH₂), amide (-NHR), ether (-N-R-O-R') and alcohol (N-R-OH). R and R' represent substituents, which may be chosen as desired. Also other components of the coating composition of the invention may comprise functional groups capable of reacting with the first and/or second functional groups. Examples of such components include solvents and other resins. It is further noted that the first resin and/or the aminoplast may further comprise non-reactive functional groups, like (non-reactive) ether groups or aliphatic hydrocarbon groups, that do not react with either the first resin and/or aminoplast, but may contribute to improving the properties of the coating composition.

The molar ratio between the first and second functional groups is at least 0.01. Preferably, the ratio is at least 0.05, more preferably at least 0.1, even more preferably at least 0.2, even more preferably at least 0.5, and most preferably at least 1, and preferably at most 100, more preferably at most 75, even more preferably at most 50, and most preferably at most 40. When the molar ratio is at least 1, the ratio expresses an excess of the aminoplast being present in the coating composition of the invention. This excess enables the aminoplast to react with itself under curing conditions, and thus form a unique network of cured resin. It is noted that the aminoplast tends to react more readily with the polyol than with itself. The skilled person will be able to determine the presence of such self-condensed aminoplast parts by using conventional analytical techniques such as ¹H NMR, ¹³C NMR, ¹⁴N NMR, near infrared spectroscopy (NIR), FT infrared spectroscopy (FT-IR) and Raman spectroscopy. When a (much) lower ratio between the first and second functional groups is used, self-condensation of the aminoplast will not proceed or proceed to a much lower extent. Molar ratios below 1 generally leads to different properties of the cured coating composition; for example when the polyol is a polyester the flexibility of the cured coating composition may exhibit a higher flexibility.

The first resin of the invention can be any resin known in the art that comprises the said second functional groups. The first resin is preferably a polyol. The polyol of the invention can be any polyol known in the art. The first resin, preferably the polyol, of the invention generally comprises second functional groups is at least one selected from the group consisting of hydroxyl (-OH), carboxylic ester (-COOR), carboxylic acid (-COOH), linear carbonates (R-CO₃), cyclic carbonates, oxirane, oxetane, anhydrides (R-CO-O-CO-R'), and thiol (-SH). Preferably, the second functional group is at least one selected from the group of hydroxyl (-OH), carboxylic ester (-COOR), and carboxylic acid (-COOH), more preferably selected from the group consisting of hydroxyl (-OH) and carboxylic acid (-COOH). When the second functional group is hydroxyl, the hydroxyl may be a primary, secondary or tertiary alcohol. Of these hydroxyl groups the primary alcohol is preferred. The substituents R and R' can be any suitable substituent known in the art, and include alkyl(ene), aryl(ene), and aralkyl(ene). The first resin, preferably the polyol, may have more than one functional group, e.g. the first resin, preferably the polyol, may contain both hydroxyl and carboxylic acids groups.

The first resin, preferably the polyol, may have an average functionality between 2 and 8. Preferably the average functionality is at most 5, more preferably at most 4 and even more preferably at most 3. In an embodiment of the invention, the first resin, preferably the polyol, comprises a second functional group being hydroxyl, and an average hydroxyl functionality between 2 and 8, preferably at most 5, more preferably at most 4 and even more preferably at most 3.

In the context of this application, the term "average functionality" or "average hydroxyl functionality" refers to the average number of functional groups or hydroxyl groups per monomer or monomeric unit in a resin.

The first resin, preferably the polyol, of the invention may be a monomer, an oligomer or polymer. In one embodiment, the first resin is preferably a monomer. Polymeric first resins, preferably polymeric polyols, may include polyesters, polyacrylates, and copolymers thereof. Of these polymeric polyols polyesters are preferred. Oligomers of the first resin refer to dimers, trimers and tetramers of the monomers of the first resin. Oligomeric polyols include dimers, trimers and tetramers of monomeric diols and/or triols. In one embodiment, the first resin may be modified by monomers, dimers or polymers having no functional groups. Modifications with monomers, dimers or polymers that are capable of hydrolyzing after curing are less preferred. Examples of suitable monomeric polyols comprising hydroxyl functional groups include 1,4-butanediol, 1,3-butanediol, 1,5-pentanediol, 1,6-hexanediol, 2,5-hexanediol, 2-methyl-1,3-pentanediol, 2-ethyl-1,3-hexanediol, 2,2-dimethyl-1,3-pentanediol, 1,4-cyclohexanediol, trimethylolethane, trimethylolpropane, pentaerythritol, dipentaerythritol, 1,4-cyclohexanedimethanol, 1,2-bis(hydroxymethyl)cyclohexane, 1,2-bis(hydroxyethyl)cyclohexane, trimethylolpropane, 2,2-dimethyl-3-hydroxypropyl-2,2-dimethyl-hydroxyproprionate, diethylene glycol, triethylene glycol, dipropylene glycol, tetraethylene glycol, trimethylolethane, glycerol, and sorbitol; and polyols comprising oxirane functional groups bisphenol A, bisphenol F, bisphenol S, alkoxylated bisphenol A such as ethoxylated bisphenol A and propoxylated bisphenol A and alkoxylated bisphenol F, such as ethoxylated bisphenol F and propoxylated bisphenol F; polyols comprising oxirane functional groups bisphenol A diglycidyl ether, 2,2'-bis(4-hydroxyphenyl)propane bis(2,3-epoxypropylether, bisphenol F diglycidyl ether, novolac glycidyl ether, ethoxylated bisphenol A and propoxylated bisphenol A. Of these polyol monomers the monomers comprising bisphenol A are preferred, in particular bisphenol A, the ethoxylated and/or propoxylated bisphenol A are preferred. It is contemplated that two or more first resins, preferably polyols, can be used in the coating compositions of the invention. When two or more first resins, preferably polyols, are present in the coating composition, the total number of second functional groups in the two or more first resins is used in the calculation of the molar ratio of first and second functional groups.

Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Copolymers of two or more of the aforementioned resins are also contemplated as long as the resulting resin contains reactive groups as is required by the invention.

The first resin, preferably the polyol, of the invention may preferably have a weight average molecular weight (Mw) of at most 100,000, more preferably at most 50,000, even more preferably at most 20,000 and most preferably at most 10,000, and preferably at least 200, more preferably at least 250 and most preferably at least 300. When the first resin, preferably a polyol, is a monomer, the first resin may preferably have a weight average molecular weight (Mw) of at most 10,000, more preferably at most 5,000, even more preferably at most 2,000 and most preferably at most 1,000, and preferably at least 200, more preferably at least 250 and most preferably at least 300.

The first resin, preferably the polyol, of the invention may preferably have a hydroxyl value of at least 50, more preferably at least 60, even more preferably at least 75, and most preferably least 100. The hydroxyl value of a first resin can be measured using standard methods, such as the method of ASTM E-222-76. In another preferred embodiment of the invention, the first resin has at least one second functional group per six monomeric units in the first resin, preferably at least one second functional group per three monomeric units, more preferably at least one second function group per monomeric unit. A higher functionality, in particular of hydroxyl groups, of the first resin generally leads to improved properties of the resulting cured coating.

Such a high functionality generally does not undesirably impact the brittleness or reduce impact resistance of the cured coating composition.

The aminoplast of the invention can be any aminoplast known in the art. The aminoplast is generally a condensation product of an aldehyde and melamine, benzoguanamine, urea or similar compounds resulting in an amine resin or an amide resin. The aminoplast of the invention generally comprises first functional groups of which at least one is selected from the group consisting of amine (-NH₂), amide (-NHR), ether (-N-R-O-R') and alcohol (N-R-OH). Preferably, the second functional group is at least one selected from the group of amide (-NHR) and ether (-N-R-O-R'). The substituents R and R' can be any suitable substituent known in the art, and include alkyl(ene), aryl(ene), and aralkyl(ene). The aminoplast may have more than one functional group, e.g. the aminoplast may contain both ether and alcohol groups.

The aminoplast may have an average functionality between 2 and 8. Preferably the average functionality is at most 7, and most preferably at most 6, and preferably at least 3 and most preferably at least 4.

The aminoplast of the invention may be a monomer, an oligomer or polymer. Polymeric aminoplasts may include melamine resin, dicyanimide resin, glycoluril resins, urea resins and copolymers thereof. Of these polymeric aminoplasts melamine resins are preferred. Oligomeric aminoplasts include dimers, trimers and tetramers of monomeric aminoplasts. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Of these aminoplasts aldehyde condensation products with melamine are preferred. Suitable aldehydes include formaldehyde, acetaldehyde, crotonaldehyde, acrolein, benzaldehyde, and furfural. Formaldehyde is the preferred aldehyde. Further modification of the aminoplasts are also considered, including etherification with a monoalcohol, such as methanol, ethanol, propanol, butanol, pentanol, hexanol and heptanol. Examples of such aminoplasts include hexamethoxymethyl melamine (Cymel 300 and Cymel 303), butylated melamine formaldehyde resin (Cymel 1156 and Cymel 1158 and Cymel MB-14), and partially butylated, methylated melamine formaldehyde resin (Cymel 1130) and butoxylated glycoluril formaldehyde resin, such as Cymel 1170. Of these hexamethoxymethyl melamine is preferred. Further examples of aminoplasts include derivatives of methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine, wherein the derivative comprises functional groups selected from the group consisting of vinyl, oxetane, carboxylic acid, hydroxyl and thiol. Examples of such derivatives include derivative of glycoluril such as TA-G, TG-G, TC-G, TH-G and TS-G. The invention also contemplates using two or more of such aminoplasts. When two or more aminoplasts are present in the coating composition, the total number of first functional groups in the two or more aminoplasts is used in the calculation of the molar ratio of first and second functional groups.

The aminoplast of the invention may preferably have a weight average molecular weight (Mw) of at most 5,000, more preferably at most 2,000, even more preferably at most 1,000 and most preferably below 600, and preferably at least 200, more preferably at least 250 and most preferably at least 300.

The invention further pertains to coating compositions comprising an adduct of the first resin and the aminoplast. In the context of this application the wording "adduct" refers to reaction products of a first resin and an aminoplast, preferably of monomers of a first resin and an aminoplast, wherein the resulting adduct maintains at least two functional groups enabling polymerization and/or cross-linking of the adduct. It is contemplated that the coating composition comprises the adduct alone, and also combinations of adduct and first resin, combinations of adduct and aminoplast, and combinations of adduct, first resin and aminoplast. Examples of such adducts include reaction products of the monomers of the first resin, preferably the polyol, and the aminoplast as described above. Such adducts are typically formed under conditions where only the adduct is formed and no or only to a small extent polymerization and/or cross-linking occurs. The coating composition of the invention preferably comprises adducts of the first resin and the aminoplast, wherein the amount of polymerized and/or cross-linked product is at most 5 wt%, based on the total weight of aminoplast and first resin. Preferably, the polymerized and/or cross-linked product of the aminoplast and first resin is present in an amount of at most 2 wt%, more preferably at most 1 wt%, even more preferably at most 0.5 wt%. Even more preferably, the coating composition is substantially free from polymerized and/or cross-linked product, and most preferably the coating composition is completely free from polymerized and/or cross-linked product. The term "substantially free" means that less than 100 parts per million of the polymerized and/or cross-linked product is present in the coating composition. The term "completely free" means that the cured coating contains less than 20 parts per billion (ppb) of polymerized and/or cross-linked product.

The functional groups of the adduct may be the functional groups derived from the first resin, preferably the polyol, and/or from the aminoplast. The molar ratio of functional groups in adducts should be considered as the molar ratio of the second functional groups of the first resin and of the first functional groups of the monomeric aminoplast, preferably the monomeric aminoplast, as present in the first resin per se and the aminoplast per se (thus prior to reacting to the adduct). The molar ratio of the second functional groups of the first resin of the adduct, preferably the monomeric first resin, and the aminoplast of the adduct, preferably the monomeric aminoplast, is at least 0.01. Preferably, the ratio is at least 0.05, more preferably at least 0.1, even more preferably at least 0.2, even more preferably at least 0.5, and most preferably at least 1, and preferably at most 100, more preferably at most 75, even more preferably at most 50, and most preferably at most 40.

In one embodiment of the invention, the coating composition comprises the aminoplast in an amount of at least 1 % by weight (wt%), based on the total weight of the first resin and the aminoplast. Preferably, the aminoplast is present in an amount of at least 5 wt%, more preferably at least 10 wt%, even more preferably at least 20 wt% and most preferably at least 30 wt%, and preferably at most 99 wt%, more preferably at most 95 wt%, even more preferably at most 90 wt% and most preferably at most 85 wt%, based on the total weight of the first resin and the aminoplast.

The coating composition of the invention comprises the first resin in an amount of at most 99 % by weight (wt%), based on the total weight of the first resin and the aminoplast. Preferably, the first resin is present in an amount of at most 95 wt%, more preferably at most 90 wt%, even more preferably at most 80 wt% and most preferably at most 70 wt%, and preferably at least 1 wt%, more preferably at least 5 wt%, even more preferably at least 10 wt% and most preferably at least 15 wt%, based on the total weight of the first resin and the aminoplast.

In one embodiment of the invention, the coating composition comprises the aminoplast in an amount of at least 1 % by weight (wt%), based on the total weight of the polyol and the aminoplast. Preferably, the aminoplast is present in an amount of at least 5 wt%, more preferably at least 10 wt%, even more preferably at least 20 wt% and most preferably at least 30 wt%, and preferably at most 99 wt%, more preferably at most 95 wt%, even more preferably at most 90 wt% and most preferably at most 85 wt%, based on the total weight of the polyol and the aminoplast.

The coating composition of the invention comprises the first resin in an amount of at most 99 % by weight (wt%), based on the total weight of solids in the coating composition. Preferably, the first resin is present in an amount of at most 95 wt%, more preferably at most 90 wt%, even more preferably at most 80 wt% and most preferably at most 70 wt%, and preferably at least 1 wt%, more preferably at least 5 wt%, even more preferably at least 10 wt% and most preferably at least 15 wt%, based on the total weight of solids in the coating composition.

The coating composition of the invention comprises the polyol in an amount of at most 99 % by weight (wt%), based on the total weight of the polyol and the aminoplast. Preferably, the first resin is present in an amount of at most 95 wt%, more preferably at most 90 wt%, even more preferably at most 80 wt% and most preferably at most 70 wt%, and preferably at least 1 wt%, more preferably at least 5 wt%, even more preferably at least 10 wt% and most preferably at least 15 wt%, based on the total weight of the polyol and the aminoplast.

The coating composition of the invention comprises the polyol in an amount of at most 50 % by weight (wt%), based on the total weight of solids in the coating composition. Preferably, the polyol is present in an amount of at most 45 wt%, more preferably at most 40 wt%, even more preferably at most 35 wt% and most preferably at most 30 wt%, and preferably at least 1 wt%, more preferably at least 5 wt%, even more preferably at least 10 wt% and most preferably at least 15 wt%, based on the total weight of solids in the coating composition.

The coating composition of the invention comprises the polyol in an amount of at most 99 % by weight (wt%), based on the total weight of solids in the coating composition. Preferably, the polyol is present in an amount of at most 95 wt%, more preferably at most 90 wt%, even more preferably at most 80 wt% and most preferably at most 70 wt%, and preferably at least 1 wt%, more preferably at least 5 wt%, even more preferably at least 10 wt% and most preferably at least 15 wt%, based on the total weight of solids in the coating composition.

In another embodiment of the invention, the coating composition comprises solids in an amount of at least 10 % by weight (wt%), based on the total weight of the coating composition. Preferably, the solids are present in an amount of at least 20 wt%, more preferably at least 30 wt%, even more preferably at least 35 wt% and most preferably at least 40 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid or non-volatile material in the coating composition; typically the solids include the resins, pigments, dyes, catalyst, etc. and does not include solvents that evaporate during the curing process. The amount of solids may also be referred to as "solids content".

The amounts of lactam and/or lactam adduct and optionally water are similar to the amounts as described above.

The remaining part of the coating composition may be comprised of other components commonly used in coating compositions. With the first resin, the aminoplast and the lactam and/or lactam adduct the other components add up to 100 wt% of the total weight of the coating composition. The other components can be any of the above-mentioned components such as solvents and (conventional) additives.

### Composition comprising monomer, oligomer and/or polymer

The invention further pertains to a composition comprising a lactam and/or an adduct of lactam, and optionally water, and a monomer, oligomer and/or polymer, wherein the composition has a lower viscosity compared to a composition without the lactam and/or the adduct of lactam, and/or the composition is more compatible compared to a composition without the lactam and/or the adduct of lactam. The lactam and/or adduct of lactam generally renders a lower viscosity of the compositions of the invention. Polymeric compositions generally have a high viscosity which makes handling and/or processing of such compositions difficult or even impossible. The lower viscosity enables easier handling of such polymer-containing compositions. In addition, caprolactam is generally recognized as safe (GRAS), allowing the creation of very environmentally friendly polymer compositions, and easy use in food-related applications.

The monomer, oligomer and/or polymer comprised in the inventive composition can be any monomer, oligomer or polymer known in the art. The oligomer generally includes dimers, trimers and tetramers of the monomer. The (co)polymers generally have a higher degree of polymerization (DP), preferably a DP of at least 20, more preferably at least 50. In this connection, for a definition of the degree of polymerization, reference is made to P.J. Flory, Principles of Polymer Chemistry, New York, 1953. The polymer or oligomer may be a homopolymer, a copolymer or a terpolymer.

Examples of suitable polymers are polyolefins, such as polyethylene and polypropylene as well as grafted polyolefins; vinyl polymers, such as polystyrene, polymethyl methacrylate, polyvinyl chloride, polyvinylidene chloride or polyvinylidene fluoride, and blends of two or more polymers. Preferred polymers are polyolefins, vinyl polymers, polyesters, polycarbonates, polyamides, polyurethanes, polyepoxides, polyvinylalcohol, polyvinylacetaat, polyethers or polythioethers.

In a further embodiment of the invention, the polymer is a thermoplastic polymer. Examples of thermoplastic polymers include polyethylene, polypropylene, grafted polyolefins, and polystyrene; acetal (co)polymers, such as polyoxymethylene (POM); rubbers, such as natural rubber (NR), styrene-butadiene rubber (SBR), polyisoprene (IR), polybutadiene (BR), polyisobutylene (IIR), halogenated polyisobutylene, butadiene nitrile rubber (NBR), hydrogenated butadiene nitril (HNBR), styrene-isoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethane-vinylacetate rubber (EVA), polyacrylic rubbers (ACM), polynorbornene (PNR); polyurethanes (AU/EU) and polyester/ether thermoplastic elastomers.

Particularly preferred are polymers or copolymers obtained by polymerization of at least one ethylenically unsaturated monomer. Such polymers include polyolefins and modified polyolefins, which are known to the man skilled-in-the-art. The polyolefin or modified polyolefin can be a homopolymer or a copolymer, terpolymer of grafted polymer. Examples of such (modified) polyolefins include polyethylene, polypropylene, polybutylene, polystyrene, polyvinyl chloride, polyvinylidene chloride and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, maleic anhydride-grafted polyolefin, maleic acid-grafted polyolefin, and mixtures thereof. More preferred polyolefins are polyethylene, polypropylene, polystyrene and polyvinyl chloride.

Suitable examples of polyethylene are high-density polyethylene (HDPE), low-density polyethylene (LDPE), straight chain low-density polyethylene (LLDPE), ultra-low density polyethylene and ultra-high molecular weight polyethylene. Further examples of ethylene-based copolymers include ethylene-vinyl acetate copolymer (EVA), ethylene-ethyl acetate copolymer (EEA), ethylene-methyl acrylate copolymer (EMA) and ethylene-acrylic acid copolymer (EAA).

Preferred polyolefins are polyethylene and polypropylene, which include emulsions and dispersions thereof. Such emulsions and dispersions can be water-based or solvent-based. Examples of such polyolefin dispersions or emulsions include Mitsui Unisol R100 G, Mitsui XP04A, Mitsui S300, Mitsui Chemipearl W900 and Dow Canvera 1110.

In one embodiment of the invention, the composition comprises the polymer in an amount of at least 10 % by weight (wt%), based on the total weight of composition. Preferably, the polymer is present in an amount of at least 20 wt%, more preferably at least 30 wt%, even more preferably at least 35 wt% and most preferably at least 40 wt%, and preferably at most 99 wt%, more preferably at most 95 wt%, even more preferably at most 90 wt%, even more preferably at most 85 wt%, even more preferably at most 80 wt%, and most preferably at most 75 wt%, based on the total weight of the composition.

In one embodiment of the invention, the composition comprises the lactam and/or lactam adduct in an amount of at most 90 % by weight (wt%), based on the total weight of composition. Preferably, the polymer is present in an amount of at most 80 wt%, more preferably at most 70 wt%, even more preferably at most 65 wt% and most preferably at most 60 wt%, and preferably at least 1 wt%, more preferably at least 5 wt%, even more preferably at least 10 wt%, even more preferably at least 15 wt%, even more preferably at least 20 wt%, and most preferably at least 25 wt%, based on the total weight of the composition.

The invention further pertains to a masterbatch comprising the lactam and/or lactam adduct in an amount of at most 50 % by weight (wt%), based on the total weight of composition. Preferably, the lactam and/or adduct of lactam is present in an amount of at most 40 wt%, more preferably at most 30 wt%, even more preferably at most 25 wt% and most preferably at most 20 wt%, and preferably at least 0.001 wt%, more preferably at least 0.5 wt%, even more preferably at least 1 wt%, even more preferably at least 2 wt%, even more preferably at least 4 wt%, and most preferably at least 5 wt%, based on the total weight of the masterbatch. Correspondingly, the masterbatch comprises at least 60 wt% of the polymer, more preferably at least 80 wt%, even more preferably at least 85 wt% and most preferably at least 90 wt%, and preferably at most 99 wt%, more preferably at most 96 wt%, and most preferably at most 95 wt% of the polymer, based on the total weight of the masterbatch. Such masterbatches are highly concentrated premixes for polymer compounding, for example. Such masterbatches are generally blended with another polymer. The further polymer may be the same or different polymer as used in the masterbatch.

The compositions of the invention including the masterbatch may further comprise additives commonly used in polymer-containing compositions including pigments and dyes, heat stabilizers, anti-oxidants, fillers, such as hydroxyapatite, silica, carbon black, glass fibers and other inorganic materials, flame retardants ,nucleating agents, impact modifiers, plasticizers, rheology modifiers, cross-linking agents, anti-gassing agents, surfactants, flow controlling agents, ultraviolet light (UV) stabilizers, adhesion enhancing promoters, waxes, matting agents, defoamers and curing catalysts. Examples of pigments and dyes include metal oxides like iron oxide, zinc oxide and; metal hydroxides; metal sulfides, metal sulfates, metal carbonates, such as calcium carbonate; carbon black, china clay, phthalo blues and greens, organo reds and other organic dyes.

The additives are optional and can be chosen according to need in amounts as desired. The composition of the invention may comprise the additives in an amount of at most 30 % by weight (wt%), based on the total weight of the composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the composition.

The remaining part of the composition may be comprised of other components commonly used in compositions. With the monomer, oligomer and/or polymer and the lactam and/or lactam adduct the other components add up to 100 wt% of the total weight of the composition.

The compositions of the invention may also be processed and shaped using techniques known in the art. Examples of such processing techniques include melt spinning, die extrusion, injection molding, compression and transfer molding, thermoforming, rotational molding and sintering, blow molding, plastic foam molding, extrusion and extrusion-based techniques, such as pipe extrusion, sheet extrusion, tubular blown film extrusion, melt spinning, netting, and coextrusion.

In a further embodiment of the invention, the composition of the invention can be used in any application for which the composition of the invention is suitable. Examples of such applications include carpeting, automobile parts, window frames, kitchen worktops, container closures, lunch boxes, closures, medical devices, household articles, food containers, dishwashers, outdoor furniture, blow-molded bottles, disposable non-woven fabrics, cables and wires and packaging.

### Solutions

The invention further pertains to a composition comprising a lactam and/or an adduct of lactam and optionally water and an organic substance, wherein the composition is a solution, and wherein the composition has a lower viscosity compared to a composition without the lactam and/or the adduct of lactam, and/or the composition is more compatible compared to a composition without the lactam and/or the adduct of lactam. The lactam and/or lactam adduct of the invention generally enable a solution with a higher solubility and/or a lowering of the viscosity and/or a faster dissolution rate. It was further found that the compositions of the invention are less prone to deposit or phase separate when electrolytes are added and/or when the pH is changed. Moreover, organic substances having a pKa can be dissolved at all and/or faster and/or with a higher solubility when combined with lactam and/or lactam adduct optionally with water, even when the pH is below the pKa value of the organic substance. Additionally, the stability of composition of the invention is generally better than compositions where no lactam and/or lactam adduct is present. An improved stability can be determined by the absence of or significant reduction of solid deposits or phase separation; also when deposits have appeared these solids can be re-dissolved when lactam and/or lactam adduct is added. With lactam and/or lactam adduct it is further possible to liquefy solid organic substances, even when the lactam and/or lactam adduct is solid. It is further noted that the lactam and/or lactam adduct, in particular ε-caprolactam, are generally food approved and lowly toxic. Moreover, the lactam and/or lactam adduct of the invention do not add to the VOC level of the solution. As the lactam and/or lactam adduct, optionally with water, may reduce or even obviate the use of organic solvents, and consequently will reduce the VOC level of the solution of the invention.

The organic substance can be any organic substance that can form a solution in lactam and/or lactam adduct and/or water. The organic substance may be a substituted or unsubstituted hydrocarbon. The organic substance may further be of natural sources and/or synthetic. In one embodiment, the organic substance may comprise a substituent, which is capable of releasing a hydrogen (H¹) or a cation (e.g. Na⁺ or K⁺). Examples of such substituents include carboxylic acids (-COOH), hydroxyl, amines (-NH₂), phosphates, phosphonates, sulfates, sulfites, sulfonates, nitrates, nitrites and salts thereof. The organic substance may be a single molecule, a monomer, an oligomer and/or a polymer.

Examples of organic substances include aromatic compounds such as salicylic acid, phenol, catechol, 2-phenol phosphinic acid, 2-phenol phosphonic acid, 2-phenol sulphonic acid, 2-nitrophenol and 2-aminophenol, benzene, naphthalene, xylene, toluene and oligomers and polymers thereof, such as the aldehyde condensation products described in WO 2018/004334. It was observed that the solubility of such aromatic compounds in water can be considerably increased upon addition of a small amount of lactam and/or lactam adduct (less than 5 wt%). Moreover, the viscosity of such solutions is generally reduced. Moreover, the aromatic compounds, e.g. salicylic acid, cannot be easily mixed into a polymer or resin without phase separation. The composition of the invention improves the compatibility of the aromatic compounds with such polymers or resins.

In one embodiment the organic substance may be an amine curing agent (e.g. for epoxy resins). Examples of amine curing agents include alkylated polyamines include propylene diamines such as coco propylene diamine, oleyl propylene diamine, arachidyl behenyl propylene diamine, soya propylene diamine, (partially) hydrogenated tallow propylene diamine, N,N,N'-trimethyl-N'-tallow propylene diamine and tallow propylene diamine; dipropylene triamines such as dodecyl dipropylene triamine, oleyl dipropylene triamine, octyl dipropylene triamine, stearyl dipropylene triamine and tallow dipropylene triamine and other polyamines such as N-tallowalkyl dipropylene tetramine, N-tallowalkyl tripropylene triamine, N-(3-aminopropyl)-N-cocoalkyl propylene diamine, N-(3-aminopropyl)-N-tallowalkyl propylene diamine, N-(3-aminopropyl)-N-cocoalkyl trimethylenediamine, N-(3-aminopropyl)-N-tallowalkyl trimethylenediamine and dendrimers containing propylene diamines; bisalkylated amines such as di(dodecyl) amine, di(oleyl) amine, di(arachidyl behenyl) amine, di(tallow) amine, di(octyl) amine, di(stearyl) amine and di(coco) amine; alkylated primary amines such as dodecyl amine, oleyl amine, hexadecyl amine, arachidyl behenyl amine, hydrogenated tallowalkyl amine, tallowalkyl amine, rapeseedalkyl amine, hydrogenated rapeseedalkyl amine, soyaalkyl amine, octyl amine, octadecyl amine, stearyl amine and coco amine; alkoxylated polyamines such as propylene diamines such as octyl/decyloxypropyl-1,3-diaminopropane, isodecyloxypropyl-1,3-diaminopropane, isododecyloxypropyl-1,3-diaminopropane, dodecyl/tetradecyloxypropyl-1,3-diaminopropane, isotridecyloxypropyl-1,3-diaminopropane and tetradecyloxypropyl-1,3-diaminopropane; and dipropylene triamines such as dodecyl dipropylene triamine, dodecyl dipropylene triamine, octyl/decyl dipropylene triamine, isotridecyl dipropylene triamine and tetradecyl dipropylene triamine; bisalkoxylated amines such as di(dodecyloxypropyl) amine, di(oleyloxypropyl) amine, di(arachidyl behenyloxypropyl) amine, di(tallowoxypropyl) amine, di(octyloxypropyl) amine, di(stearyloxypropyl) amine and di(cocoalkyloxy) amine; and alkoxylated amines such as isopropyloxypropyl amine, hexyloxypropyl amine, 2-ethylhexyloxypropyl amine, octyl/decyloxypropyl amine, isodecyloxypropyl amine, dodecyl/tetradecyloxypropyl amine, isotridecyloxypropyl amine, tetradecyloxypropyl amine, tetradecyl/dodecyloxypropyl amine, linear alkyloxypropyl amine and octadecyl/hexadecyloxypropyl amine. Also (liquefied) combinations with phenol-based compounds such as salicylic acid and catechol as described in WO 2012/177120 and WO 2012/177121 are contemplated. Such amines have a tendency to be unstable and solid depositions occur in the presence of electrolytes in particular metallic ions. The lactam and/or lactam adduct of the invention prevent such solid depositions. Moreover, when such solids are present the lactam and/or lactam adduct may dissolve such solids and form a storage stable liquid.

In one embodiment, the organic substance may be a polysaccharide. Examples of polysaccharides include celluloses such as cellulose, methyl cellulose (MC), ethyl cellulose (EC), hydroxyethyl cellulose (HEC), ethyl hydroxyethyl cellulose (EHEC), methyl ethyl hydroxyethyl cellulose (MEHEC), carboxymethyl cellulose (CMC), hydroxypropyl methyl cellulose (HPMC); and starches such as starch, oxidized starch, hydroxyethyl starch, hydroxypropyl starch and carboxymethyl starch; chitin and arabinoxylans. The polysaccharide can have any degree of polymerization (DP) and degree of substitution (DS) known in the art. It was found that polysaccharides, like sodium CMC, can be dissolved only slowly in water (ca. 30 minutes to complete dissolution), and by addition of lactam and/or lactam adduct - even at low amounts (below 5 wt%) - the dissolution rate of sodium CMC can be significantly increased (complete dissolution well within 5 minutes) under the same conditions (temperature, pressure and pH). It is believed that the lactam and/or lactam adduct can disentangle the long chains of the sodium CMC quickly and in this way cause a faster dissolution of the sodium CMC. Moreover, the viscosity of the polysaccharide solutions of the invention may be lowered.

The organic substance may also be an aliphatic hydrocarbon. Preferably, the organic substance is an aliphatic hydrocarbon which is liquid or solid at room temperature. In one embodiment, the organic substance is an aliphatic hydrocarbon with 5 or more carbon atoms. Examples of such aliphatic hydrocarbons include alkanes such as pentane, hexane, heptane, nonane and decane; alkenes such as 1,3-butadiene, 1-pentene, 2-pentene, 1,3-pentadiene, 1-hexene and 2-hexene; alkynes such as 1-butyne, 2-butyne and 1-pentyne; long-chain alkanes such as white oil and paraffinic oil; cycloalkanes such as cyclopentane, cyclohexane and cycloheptane; and combinations of aliphatic carbons such as gasoline, diesel, biodiesel, aviation fuel and kerosine. Also substituted and/or branched aliphatic hydrocarbons and blends of two or more aliphatic hydrocarbons are contemplated. The inventors found that the lactam and/or adduct of lactam can be used to prevent phase separation of water and aliphatic carbon combination such as gasoline as the water will be blended into the gasoline. This results in a more homogenous burning profile of the gasoline.

The organic substance generally has a relatively low solubility in water at 20°C. The organic substance of the invention has a solubility in water at 20°C of at most 50 g/l. Preferably, the solubility in water at 25°C is at most 20 g/l, more preferably at most 10 g/l and even more preferably at most 5 g/l, and most preferably at most 1 g/l, and generally at least 1 mg/l, preferably at least 2 mg/l, more preferably at least 5 mg/l, and most preferably at least 10 mg/l.

In one embodiment, the composition may comprise the organic substance in an amount of at most 95 % by weight (wt%), based on the total weight of the composition. Preferably, the organic substance is present in an amount of at most 90 wt%, more preferably at most 85 wt%, even more preferably at most 80 wt% and most preferably at most 75 wt%, and preferably at least 1 wt%, more preferably at least 2 wt%, even more preferably at least 5 wt% and most preferably at least 10 wt%, based on the total weight of the composition.

In one embodiment, the composition may comprise the organic substance in an amount of at most 95 % by weight (wt%), based on the total weight of the organic substance and the lactam and/or lactam adduct. Preferably, the organic substance is present in an amount of at most 90 wt%, more preferably at most 85 wt%, even more preferably at most 80 wt% and most preferably at most 75 wt%, and preferably at least 1 wt%, more preferably at least 2 wt%, even more preferably at least 5 wt% and most preferably at least 10 wt%, based on the total weight of the organic substance and the lactam and/or lactam adduct.

In one embodiment, the composition may comprise the lactam and/or lactam adduct in an amount of at least 5 % by weight (wt%), based on the total weight of the composition. Preferably, the lactam and/or lactam adduct is present in an amount of at least 10 wt%, more preferably at least 15 wt%, even more preferably at least 20 wt% and most preferably at least 25 wt%, and preferably at most 99 wt%, more preferably at most 98 wt%, even more preferably at most 95 wt% and most preferably at most 90 wt%, based on the total weight of the composition.

In one embodiment, the composition may comprise the lactam and/or lactam adduct in an amount of at least 5 % by weight (wt%), based on the total weight of the organic substance and the lactam and/or lactam adduct. Preferably, the lactam and/or lactam adduct is present in an amount of at least 10 wt%, more preferably at least 15 wt%, even more preferably at least 20 wt% and most preferably at least 25 wt%, and preferably at most 99 wt%, more preferably at most 98 wt%, even more preferably at most 95 wt% and most preferably at most 90 wt%, based on the total weight of the organic substance and the lactam and/or lactam adduct.

Water may also be present in the composition of the invention. The combination of water and lactam and/or lactam adduct have the further advantage of an improved rheology, e.g. a lower viscosity and/or less to no gel formation or an improved compatibility, e.g. a faster dissolution and/or the absence of phase separation or solid deposition. The presence of lactam and/or lactam adduct in water enhances the solubility of apolar molecules while simultaneously decreasing viscosity or maintaining a low viscosity.

The weight ratio between water and lactam and/or lactam adduct is at least 0.01, preferably at least 0.05, more preferably at least 0.1, even more preferably at least 0.2, and most preferably at least 0.5, and generally at most 100, preferably at most 50, more preferably at most 20, even more preferably at most 10, and most preferably at most 5.

In one embodiment, the composition may comprise water in an amount of at most 50 % by weight (wt%), based on the total weight of the composition. Preferably, water is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the composition.

The remaining part of the composition may be comprised of other components commonly used in compositions. With the organic substance and the lactam and/or lactam adduct the other components add up to 100 wt% of the total weight of the composition.

### Emulsions

The invention further pertains to an emulsion comprising water, oil and a lactam and/or an adduct of lactam, wherein the composition has a lower viscosity compared to a composition without the lactam and/or the adduct of lactam, and/or the composition is more compatible compared to a composition without the lactam and/or the adduct of lactam. The emulsion of the invention comprises two liquids and can be an oil-in-water emulsion or a water-in-oil emulsion. Preferably, the emulsion is an oil-in-water emulsion. The lactam and/or lactam adduct of the invention is capable of lowering the viscosity of such emulsions. Moreover, it was found that the lactam and/or lactam adduct enabled a single phase when oil, e.g. white oil, and water were mixed with no or a delayed phase separation. The stability of emulsions of the invention are also generally improved.

The emulsion can be any emulsion known in the art. The emulsion can be a micro-emulsion comprising micrometer-sized droplets and a nano-emulsion comprising nanometer-sized droplets.

The oil suitable in the emulsion of the invention is any oil or hydrophobic liquid known in the art. Examples of such oils include hydrocarbon oils such as mineral oil fractions comprising linear mineral oils (n-paraffins), branched mineral oils (iso-paraffinic) and/or cyclic mineral oils (naphthenic oils); polyisobutylenes (PIB), phosphate esters such as trioctyl phosphate; polyalkylbenzens such as heavy alkylates, dodecyl benzene and other alkylarenes; esters of aliphatic monocarboxylic acids; linear or branched mono unsaturated hydrocarbons such as linear or branched alkanes containing 8 to 25 carbon atoms and linear or branched alkenes containing 8 to 25 carbon atoms; and natural oils such as palm oil, soybean oil, olive oil, sunflower oil, rapeseed oil and castor oil.

In one embodiment of an oil-in-water emulsion, the emulsion may comprise the oil in an amount of at most 50 % by weight (wt%), based on the total weight of the emulsion. Preferably, the oil is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the emulsion.

In one embodiment of an oil-in-water emulsion, the emulsion may comprise the oil in an amount of at most 50 % by weight (wt%), based on the total weight of the oil and water. Preferably, the oil is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the oil and water.

In one embodiment of an oil-in-water emulsion, the emulsion may comprise water in an amount of at least 50 % by weight (wt%), based on the total weight of the emulsion. Preferably, water is present in an amount of at least 60 wt%, more preferably at least 65 wt%, even more preferably at least 70 wt% and most preferably at least 75 wt%, and preferably at most 99 wt%, more preferably at most 98 wt%, even more preferably at most 95 wt% and most preferably at most 90 wt%, based on the total weight of the emulsion.

In one embodiment of an oil-in-water emulsion, the emulsion may comprise water in an amount of at least 50 % by weight (wt%), based on the total weight of the oil and water. Preferably, water is present in an amount of at least 60 wt%, more preferably at least 65 wt%, even more preferably at least 70 wt% and most preferably at least 75 wt%, and preferably at most 99 wt%, more preferably at most 98 wt%, even more preferably at most 95 wt% and most preferably at most 90 wt%, based on the total weight of the oil and water.

In one embodiment of a water-in-oil emulsion, the emulsion may comprise water in an amount of at most 50 % by weight (wt%), based on the total weight of the emulsion. Preferably, water is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the emulsion.

In one embodiment of a water-in-oil emulsion, the emulsion may comprise water in an amount of at most 50 % by weight (wt%), based on the total weight of the oil and water. Preferably, water is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the oil and water.

In one embodiment of a water-in-oil emulsion, the emulsion may comprise the oil in an amount of at least 50 % by weight (wt%), based on the total weight of the emulsion. Preferably, the oil is present in an amount of at least 60 wt%, more preferably at least 65 wt%, even more preferably at least 70 wt% and most preferably at least 75 wt%, and preferably at most 99 wt%, more preferably at most 98 wt%, even more preferably at most 95 wt% and most preferably at most 90 wt%, based on the total weight of the emulsion.

In one embodiment of a water-in-oil emulsion, the emulsion may comprise the oil in an amount of at least 50 % by weight (wt%), based on the total weight of the oil and water. Preferably, the oil is present in an amount of at least 60 wt%, more preferably at least 65 wt%, even more preferably at least 70 wt% and most preferably at least 75 wt%, and preferably at most 99 wt%, more preferably at most 98 wt%, even more preferably at most 95 wt% and most preferably at most 90 wt%, based on the total weight of the oil and water.

The lactam and/or lactam adduct of the invention can be chosen according to need in amounts as desired. The emulsion of the invention, both the water-in-oil emulsion and the oil-in-eater emulsion, may comprise the lactam and/or lactam adduct in an amount of at most 30 % by weight (wt%), based on the total weight of the emulsion. Preferably, the lactam and/or lactam adduct is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the emulsion.

Alternatively, the emulsion of the invention may comprise the lactam and/or lactam adduct in an amount of at most 30 % by weight (wt%), based on the total weight of the oil and water. Preferably, the lactam and/or lactam adduct is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the oil and water.

The remaining part of the composition may be comprised of other components commonly used in emulsions. With the oil, water and the lactam and/or lactam adduct the other components add up to 100 wt% of the total weight of the emulsion.

The emulsion of the invention may further comprise an emulsifier. The lactam and/or lactam adduct may enable the formation of a stable emulsion. When the lactam and/or adduct alone is not sufficient to form a stable emulsion, an emulsifier may be added. Alternatively, when the aim is to change the rheology of the emulsion, in particular to reduce its static and/or dynamic viscosity, the lactam and/or lactam adduct can be added to an emulsion comprising conventional emulsifiers. The emulsifier can be any emulsifier known in the art and which can form a stable emulsion. Examples of such emulsifiers include food emulsifiers such as lecithin, soy lecithin, sodium phophates, mono- and diglycerides, sodium stearoyl lactylate, diacetyl tartaric ester of monoglyceride (DATEM); anionic detergents such as alkylbenzene sulfonates, N-acylglycinates and N-acylglutamates; cationic detergents such as quaternary ammonium compounds, non-ionic detergents such as polyoxyethylene-based detergents such as polysorbates (e.g.Tween 80) and polyoxyethylene octyl phenyl ether (Triton X-100) and glucosides such as octylthioglucoside (OTG); zwitterionic detergents such as betaines, N-alkylamidobetaines and polyaminocsarboxylates; and emulsifiers used in pharmacy such as emulsifying wax, polysorbate 20, ceteareth 20.

The emulsifier can be chosen according to need in amounts as desired. The emulsion of the invention, both the water-in-oil emulsion and the oil-in-eater emulsion, may comprise the emulsifier in an amount of at most 30 % by weight (wt%), based on the total weight of the emulsion. Preferably, the emulsifier is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the emulsion.

Alternatively, the emulsion of the invention may comprise the emulsifier in an amount of at most 30 % by weight (wt%), based on the total weight of the oil and water. Preferably, the emulsifier is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the oil and water.

The emulsions may further comprise additives such as heat stabilizers, flame retardants, UV stabilizers, fungicides, biocides, perfumes, relaxers, colorants, fillers, pigments and dyes, thickeners, preservatives, freeze thaw stabilizers, moisturizers, pH controlling agents, water phase stabilizing agents, vitamins, sebum absorbants, active ingredients and antifoams. The active ingredients may be an active pharmaceutical ingredient vegetable or botanical extracts, essential oils, or a cosmetic component. Examples of such active ingredients include anti-acne agents, antibacterial agents, antifungal agents, therapeutic active ingredients, external analgesics, skin bleaching agents, anti-cancer agents, diuretics, agents for treating gastric and duodenal ulcers, proteolytic enzymes, antihistamine or H1 histamine blockers, sedatives, bronchodilators, cardiovascular agents, antiarrhythmic agents, ACE inhibitors, non.-steroidal anti-inflammatory agents such as diclofenac, antipsoriasis agents such as clobetasol propionate, anti-dermatitis agents, corticosteroidal drugs, beta-blockers and alpha-I blockers. The emulsions of the invention can be used in food application, paints, construction applications, textiles e.g. fiber treatment, leather lubrication, household care compositions, softening, fabric care in laundry applications, healthcare applications, release agents, water-based coatings and personal care or cosmetic applications. The cosmetic applications include those that are intended to be placed in contact with portions of the human body (skin, hair, nails, mucosa, etc.) or with teeth and the mucous membranes of the oral cavity with a view exclusively or mainly to cleaning them, perfuming them, changing their appearance, protecting them, keeping them in good condition or modifying odors, and skin care, sun care, hair care or nail care applications. Consequently, the present invention further pertains to emulsions of the invention, in particular oil-in-water emulsions, for use in creams, ointments, unguents, gels, pastes, liniments, foams, transdermal patches, lotions and topical solutions.

In one aspect of the invention, the invention pertains to a cosmetic composition comprising the lactam and/or lactam adduct of the invention, an active cosmetic ingredient and a cosmetic excipient. The active cosmetic ingredient can be any conventional active cosmetic ingredient used in cosmetic compositions known in the art. The cosmetic excipient can be any conventional excipient used in cosmetic compositions known in the art. The invention further pertains to a cosmetic composition comprising the emulsion of the invention, in particular the oil-in-water emulsion. The advantage of the lactam and/or lactam adduct of the invention is the easier preparation of complex compositions due to the improved compatibility and/or the lowering of the static or dynamic viscosity of the compositions.

In another aspect, the invention pertains to topical compositions comprising the emulsion of the invention, in particular the oil-in-water emulsion. Moreover, the invention pertains to a hair care composition, in particular shampoo, comprising the emulsion of the invention, in particular the oil-in-water emulsion. The lactam and/or lactam adduct of the invention allows for removal of grease present in hair and head skin without significantly affecting the head skin, for example through skin reddening or allergic reactions.

The invention further pertains to a pharmaceutical composition comprising the lactam and/or lactam adduct of the invention, an active pharmaceutical ingredient and a pharmaceutical excipient. The pharmaceutical excipient can be any conventional excipient used in pharmaceutical compositions known in the art. Moreover, the invention pertains to a pharmaceutical composition comprising the emulsion of the invention, in particular the oil-in-water emulsion. The lactam and/or lactam adduct generally allows a higher dose of the active pharmaceutical ingredient (API) in the pharmaceutical composition. Especially, higher doses of the lowly water-soluble APIs are achievable, especially APIs from the BCS classes II and IV.

The lactam and/or lactam adduct of the invention can also be used in processes wherein emulsions are used, such as emulsion polymerization such as the polymerization of plastics such as polyvinyl chloride (PVC), polystyrene (PS), polymethylmethacrylate (PMMA); the polymerization of synthetic rubbers such as styrene-butadiene rubber (SBR), polybutadiene and polychloroprene (Neoprene).

### Dispersions

The invention further pertains to a dispersion comprising a lactam and/or an adduct of lactam, and optionally water, and solid particles, wherein the composition has a lower viscosity compared to a composition without the lactam and/or the adduct of lactam, and/or the composition is more compatible compared to a composition without the lactam and/or the adduct of lactam.

The solid particles may be any solid particle known in the art and which can be suitably used in dispersions. The solid particles of the invention may be selected from polymeric particles, oxide and/or hydroxide particles, pigments and fillers.

Examples of polymeric particles include polyolefins such as polystyrene, polyethylene and polypropylene; polyesters such as polyacrylate and polymethyl methacrylate. Further examples of monomers of suitable polymers have been described above.

Examples of oxides and/or hydroxides particles include oxides and hydroxides of aluminum, silicium, boron, sodium, potassium, calcium, iron, nickel, cobalt, titanium, zirconium, cerium, chromium, zinc, tin and tungsten. Preferably, the oxide and/or hydroxides particles are oxides and/or hydroxides selected from aluminum, silicium, calcium, titanium and iron.

Examples of pigments include metal-based pigments, inorganic pigments and biological and organic pigments. Examples of metal-based pigments include cadmium pigments such as cadmium yellow cadmium green, cadmium orange, cadmium sulfoselenide and cadmium red; cobalt pigments such as cobalt violet, cobalt blue, aureolin and cerulean blue; chromium pigments such as chrome yellow and chrome green (viridian); copper pigments such as azurite, Han purple, Han blue and Egyptian blue; iron oxide pigments such as sanguine, caput mortuum, red ochre, Venetian red and Prussian blue; lead pigments such as lead white, Naples yellow, red lead and lead-tin-yellow; manganese pigments such as manganese violet and YlnMn blue; mercury pigments such as vermillion; titanium pigments such as titanium yellow, titanium beige, titanium white and titanium black; and zinc pigments such zinc white, zinc ferrite and zinc yellow. Examples of (non-metal-based) inorganic pigments include carbon pigments such as carbon black and ivory black and clay earth pigments such as yellow ochre, raw sienna, burnt sienna, raw umber and burnt umber; and ultramarine pigments such as ultramarine and ultramarine green shade. Examples of biological pigments include alizarin, alizarin crimson, gamboge, cochinal red, rose madder, indigo, indian yellow and Tyrian purple. Examples of organic pigments include quinacridone, magenta, phthalo green, phthalo blue, pigment red 170 and diarylide yellow.

Examples of fillers include calcium carbonates such as ground calcium carbonate (GCC) and precipitated calcium carbonate (PCC), kaolin, carbon black, talc, bentonite, hydrotalcite and hydrotalcite-like clays, diatomite, limestone, titanium dioxide, wood flour, saw dust, calcium sulphate, aluminum trihydrate, aluminum silicate and silica.

In one embodiment, the dispersion may comprise the solid particles in an amount of at most 60 % by weight (wt%), based on the total weight of the dispersion. Preferably, the solid particles is present in an amount of at most 50 wt%, more preferably at most 40 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the composition.

In one embodiment of the invention, the solid particles have a d90 value of at most 100 µm, preferably at most 50 µm, more preferably at most 20 µm, even more preferably at most 10 µm, even more preferably at most 5 µm, and most preferably at most 1 µm, and at least 10 nm, preferably at least 20 nm, more preferably at least 50 nm and most preferably at least 100 nm.

In one embodiment of the invention, the solid particles have a d99 value of at most 100 µm, preferably at most 50 µm, more preferably at most 20 µm, even more preferably at most 10 µm, even more preferably at most 5 µm, and most preferably at most 1 µm, and at least 10 nm, preferably at least 20 nm, more preferably at least 50 nm and most preferably at least 100 nm.

In one embodiment of the invention, the solid particles have a d90 value of at most 100 µm, preferably at most 50 µm, more preferably at most 20 µm, even more preferably at most 10 µm, even more preferably at most 5 µm, and most preferably at most 1 µm, and at least 500 nm, preferably at least 1 µm, more preferably at least 2 µm and most preferably at least 5 µm. Solid particles with a particle size (or d90 value) smaller than 500 nm, and preferably smaller than 1 µm, may pose a health risk to humans and other mammals.

In one embodiment of the invention, the solid particles have a d99 value of at most 100 µm, preferably at most 50 µm, more preferably at most 20 µm, even more preferably at most 10 µm, even more preferably at most 5 µm, and most preferably at most 1 µm, and at least 500 nm, preferably at least 1 µm, more preferably at least 2 µm and most preferably at least 5 µm.

In one embodiment, the dispersion may comprise the lactam and/or lactam adduct in an amount of at least 40 % by weight (wt%), based on the total weight of the dispersion. Preferably, the lactam and/or lactam adduct is present in an amount of at least 50 wt%, more preferably at least 60 wt%, even more preferably at least 70 wt% and most preferably at least 75 wt%, and preferably at most 99 wt%, more preferably at most 98 wt%, even more preferably at most 95 wt% and most preferably at most 90 wt%, based on the total weight of the dispersion.

Water may also be present in the composition of the invention. The combination of water and lactam and/or lactam adduct have the further advantage of an improved rheology, e.g. a lower viscosity and/or less to no flocculation or an improved compatibility, e.g the absence of phase separation or solid deposition and easier mixing in a matrix such as a binder and/or polymer.

The weight ratio between water and lactam and/or lactam adduct is at least 0.01, preferably at least 0.03, more preferably at least 0.05, even more preferably at least 0.1, even more preferably at least 0.2, and most preferably at least 0.5, and generally at most 100, preferably at most 50, more preferably at most 40, even more preferably at most 20, even more preferably at most 10, and most preferably at most 5.

In one embodiment, the dispersion may comprise water in an amount of at most 50 % by weight (wt%), based on the total weight of the dispersion. Preferably, water is present in an amount of at most 40 wt%, more preferably at most 35 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the dispersion.

Additionally or alternatively to water, another solvent may be present. Examples of other solvents include alcohols such as ethanol and isopropanol; alkanes such as pentane and hexane; ketones such as methyl ethyl ketone (MEK), acetone and methyl propyl ketone; and aromatic solvents such as toluene and benzene. In a preferred embodiment, the dispersion does not comprise another solvent. Especially, these solvents increase the amount of volatile organic compounds (VOC) when partly replacing water. Therefore, the dispersion of the invention only comprises water and/or lactam and/or lactam adduct as solvent.

The remaining part of the composition may be comprised of other components commonly used in dispersions. With the solid particles and the lactam and/or lactam adduct the other components add up to 100 wt% of the total weight of the composition.

### Uses

The lactam and/or adduct of lactam, optionally with water, can be used in a wide range of applications. The invention pertains to the use of lactam and/or lactam adduct, optionally with water, in food applications, paints, construction applications, textiles e.g. fiber treatment, leather lubrication, household care compositions, softening, fabric care in laundry applications, healthcare applications, release agents, water-based coatings, personal care or cosmetic applications, emulsion polymerizations, carpeting, automobile parts, window frames, kitchen worktops, container closures, lunch boxes, closures, medical devices, household articles, food containers, dishwashers, outdoor furniture, blow-molded bottles, disposable non-woven fabrics, cables and wires, packaging, coil coating applications, can coatings (both external and internal can coatings), car refinish, mining, oil drilling, fuel additive and automotive applications. Each of these uses is separately contemplated and is meant to be explicitly and individually disclosed.

The invention is exemplified in the following Examples.

### Examples

### Example 1

5 g of Epikote 828 (solid) was mixed with 5 g ε-caprolactam (solid). The mixture was heated to 70°C, upon which the mixture turns into a liquid. Subsequently, the liquid mixture was cooled to room temperature. A pourable, transparent liquid was obtained.

## Claims

1. Use of lactam and/or lactam adduct as a rheology modifier and/or compatibilizer.

2. A coating composition comprising a lactam and/or an adduct of lactam, and optionally water, and a first resin, wherein the composition has a lower viscosity compared to a composition without the lactam and/or the adduct of lactam, and/or the composition is more compatible compared to a composition without the lactam and/or the adduct of lactam.

3. A composition comprising a lactam and/or an adduct of lactam, and optionally water, and a monomer, oligomer and/or polymer, wherein the composition has a lower viscosity compared to a composition without the lactam and/or the adduct of lactam, and/or the composition is more compatible compared to a composition without the lactam and/or the adduct of lactam.

4. An emulsion comprising water, oil and a lactam and/or an adduct of lactam, wherein the composition has a lower viscosity compared to a composition without the lactam and/or the adduct of lactam, and/or the composition is more compatible compared to a composition without the lactam and/or the adduct of lactam.

5. A dispersion comprising a lactam and/or an adduct of lactam, and optionally water, and solid particles, wherein the composition has a lower viscosity compared to a composition without the lactam and/or the adduct of lactam, and/or the composition is more compatible compared to a composition without the lactam and/or the adduct of lactam.

6. A coated substrate comprising a substrate and a cured coating composition applied to at least part of the substrate, the coating composition being in accordance with claim 2.

7. Coated substrate according to claim 6 wherein the substrate is a metal, preferably aluminum.

8. Coated substrate according to any one of claims 6 and 7 wherein the coated substrate is a food or beverage container.

9. Process for preparing a coated substrate comprising steps of:
(a) applying the coating composition according to claim 2 to a substrate; and
(b) curing the coating composition.

10. Process of claim 9 further comprising the step of shaping the coated substrate to a food or beverage container.
